# EUROPEAN PATENT SPECIFICATION

(11) **EP 2 948 934 B1**
(45) Date of publication and mention of the grant of the patent: **25.08.2021**
(21) Application number: 14707945.3
(22) Date of filing: 24.01.2014
(51) Int. Cl.: G08G 1/00, G08G 1/01, G08G 1/16, G06Q 30/00, G07B 15/00

(54) **TRANSACTION SYSTEM**
VERKEHRSÜBERWACHUNGS- UND -LEITSYSTEM
SYSTÈME DE GUIDAGE ET DE SURVEILLANCE DE TRAFIC

(30) Priority: 24.01.2013 EP 13152551; 07.10.2013 EP 13187484
(43) Date of publication of application: 02.12.2015
(73) Proprietor: Eilertsen, Roger André, 1812 Askim (NO)
(72) Inventor: Eilertsen, Roger André, 1812 Askim (NO)
(74) Representative: Bryn Aarflot AS
(86) International application number: PCT/EP2014/051410
(87) International publication number: WO 2014/114753

(56) References cited:
- DE-A1-102008 009 330
- FR-A1- 2 913 797
- US-A1- 2009 124 234
- US-A1- 2009 231 432
- US-A1- 2010 274 652
- US-A1- 2010 274 652
- US-A1- 2011 128 902
- US-A1- 2011 246 594

## Description

### FIELD OF THE INVENTION

The present invention relates to a transaction system wherein the system tracks geographical movements of customers relative to geographical positions of shops or retail outlets or service providers etc., wherein a transaction between a specific customer and a specific shop or retail outlet or service providers etc. is provided via a transaction system established by the system based on the tracked relative geographical movements of the customer relative to the geographical position of shops or retail outlets or service providers and similar enterprises.

### BACKGROUND OF THE INVENTION

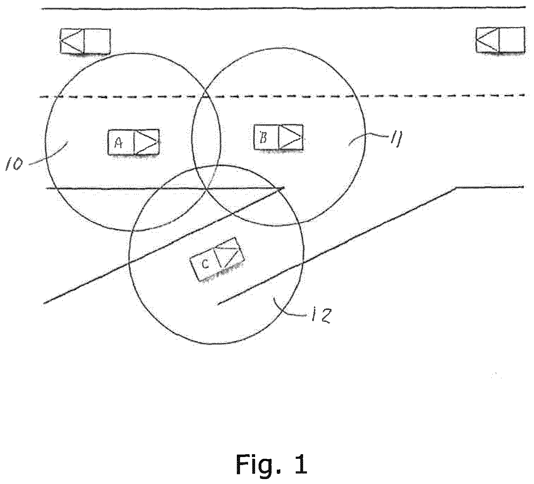

The European Patent application 13152551 with the title "A traffic surveillance and guidance system" by the same inventor as the present application, disclose a traffic information and guidance system providing a communication channel for example between road users driving their respective cars. Each driver has a field of view and the basic concept is that it is possible to combine the field of views of a plurality of road users, or just between two drivers driving for example on a same road. Figure 1 illustrates schematically a combined field of view between a road user in car A with a field of view 10, field of view 11 of a road user in car B and a field of view 12 of a road user in car C. Some of the technical features of the invention enabling this concept are that each road user registers himself as a member and user of a server system providing for example traffic information services. When registering, a road user selects a specific geometrical shape and size representing a model of his intended field of view, for example a circle of 500 meters diameter. The server tracks geographical positions, for example the Global Positioning System (GPS) coordinates of cars or of mobile terminals associated with the registered road users, for example by tracking GPS positions of a GPS navigation terminal in cars, and/or mobile phones or mobile terminals like an iPad etc. registered to road users, and which the road users carries with them. The tracking system may also be combined with hybrid positioning systems providing improved resolution of positions both outside and inside buildings. When a driver is on the road the server may identify based on the dimensions of the modelled field of views and the tracked geographic positions of the associated user of the field of view that the modelled field of view is partly overlapping the modelled field of views of other registered users of the system. A union of respective field of views are established and is maintained as long as a partly overlap is identified to exist between them. In a union the server will establish at least a communication channel or a message distribution process between the members of the union. When there is no partly overlap between a specific user's field of view with any other fields of views of other members of the union the at least established communication link or message distribution process to and from this specific user is terminated.

When one member of a union detects for example a traffic incident that will influence the traffic flow, for example a traffic accident, the member can signal other members in the union about the incident just by pushing a "report accident" button, or a "report traffic queue" button for example on the display of his GPS navigation unit in the car, or mobile phone. This message is then sent via the communication channel of message distribution process within the union to the other members of the union, but without any identification about who sent the message. The messages can be stamped with time, date and GPS coordinates of the location the messages were sent from. Besides being distributed within a union the server may record messages and in this manner the server may keep updates and history of incidents in lists, and optionally update navigation maps with graphical symbols on locations an incident has occurred, for example. The server may also perform an arbitration process removing conflicting messages distributed in a union. The concept of a "road user" is a broad concept comprising also petrol stations etc. that also may have a "field of view" definition. Whenever a road user forms a union with a petrol station the communication between the petrol station and the road user may be for example to inform the road user about current prices on petrol from this petrol station.

Within the concept of "field of view" the inventor of the present invention has realized that there is a broad concept related to the term "field" while the term "view" is a qualifier of the term "field". With reference to field theory of physics the term "qualifier" can be viewed to be equivalent to the use of terms like gravitation, electromagnetism and hence to the field theory of gravitation, the field theory of electromagnetism etc. The qualifier then indicates the type and nature of the interactions that may appear within the qualified field. Therefore, in an example of embodiment of the present invention a specific shop or retail outlet or service providers etc. may be registered as a user in an example of a server according to the present invention together with a geometric definition of shape and size of a field that can be qualified to be a "supplier field" due to the nature of the operation of for example the petrol station or a provider of services and/or articles. Ordinary road users may register corresponding "consumer field". Therefore, when a server according to the present invention detects partly overlap between a supplier field and a consumer field the server is configured to establish a transaction system (payment system) between the supplier and the consumer within a union denoted a "transaction union".

Within the concept of field of view as discussed above, it is apparent that any type of shop or retail outlet etc. can be a member of such a system as well as any type of user. The requirement is that the user can be tracked by a server system with respect to geographical positions outside as well as inside buildings. A shop like a petrol station has also a geographical position, but this position is fixed. Therefore, transaction unions between supplier fields and consumer fields are based on detecting relative movements of consumer fields relative to supplier fields, and whenever a consumer comes into a union with a supplier, due to the relative movement between them, a transaction union facilitating payment between the consumer and the supplier is established inside the union.

In view of the concept of services and/or functions the petrol station is then a supplier, the road user (driver) is a consumer and a bank can be a facilitator transferring money from the consumer to the supplier, for example when a credit or debit card is used in the transaction. In a sense there is a communication link between the three participants of this transaction. The petrol station asks the customer to pay an amount of money, and the customer initiates a payment with his bank that transfers money to a bank account in the name of the petrol station. The session ends when the bank notifies the petrol station that payment actually has taken place and the money is on its way to the account of the petrol station.

When the driver moves away again from the petrol station the transaction union with the petrol station automatically terminates when he is outside the supplier field of the petrol station, i.e. the union is broken which also terminates any further payments from the user until a new transaction union is formed with him, for example in a next shop.

In prior art it is a huge interest in providing secure and simple payment systems. For example, the contemporary concept of Internet stores like the App store by Apple is a huge success partly due to the simplified method of purchasing and paying for the purchased articles. The common term for this simplified process is "One Click Shopping".

The basic idea is that a user can register and provide for example credit or debit card information in a user profile. When the user accepts his purchases in the Internet store he just clicks an accept button which triggers a payment transaction with his stored card details from the Internet Store to the bank or credit card company which results in a transfer of money to the Internet store, i.e. the bank account associated with the Internet store. The security against misuse of the stored credit or debit card in the user profile is linked to the user name and password the user has selected, and security measures like firewalls around the computer system hosting the Internet Store. However, the user name and password when entered by the user on his private terminal or computer when registering the details is known to be vulnerable to spyware that can pick up user names and passwords. Therefore, added security routines or sessions with for example a payment provider, for example sessions requiring entering "verified by VISA" passwords and similar routines, for example PIN codes, or the use of a separate PIN code calculator can be required.

In the example of transactions described above with a petrol station it is possible to visualize a sort of Internet store concept when purchasing petrol. A customer of a certain chain of petrol stations can apply for a member ship or loyalty program card that can be used when paying for petrol. The customer then uses his loyalty program card that identifies the person in question, i.e. identifies which stored user profile with information of a credit or debit card that should be activated. In this manner the credit or debit card is only activated and used within a server controlling the loyalty program cards. However, customers cannot acquire hundreds of different loyalty program cards to avoid using their own credit or debit cards directly when buying items and services.

Quick and simplified and secure transactions in ordinary shops are also a concept in development, and there is a development towards "One Click" concepts adapted to ordinary shopping behaviours. Some stores use self-service terminals at the exit that comprises a scanner that can scan bar code etiquettes attached to articles from the shop, and a Point of Sale (POS) terminal permitting the customer to pay the accumulated purchase by for example using a credit or debit card together with a secret PIN code related to the card. The POS terminal then initiates a transaction over a network to a bank or a credit card company. However, it is known that such terminals are vulnerable towards skimming equipment that criminals can hide or disguise in these terminals and thereby get hold of card details, PIN codes and/or passwords and then later steal the card and misuse it.

Toll road systems are also well known systems that can provide simplified payment methods for registered car users. For example, it is possible to have an on-board unit in the car that can be read remotely by a sensor located at a toll road station. WO 2012165972 by Anders Hagen discloses such an example of an on-board unit. When the on-board unit is accessed a unique identification code for the unit can be fetched and used to access pre-stored payment details related to the registered car (i.e. the unique identification code) in a server system for example, which can be pre-stored credit or debit card information as discussed above, or by a transaction process charging an amount from a pre-paid amount of money related to the unique identification code of the car.

Payment via mobile terminals are also in development and seems to gain more and more accept as a secure and efficient payment terminal and method when paying for services and articles from shops. For example, WO 2009003030 by Mark Carlson provides a method for conducting a transaction that includes receiving a pseudo account identifier that corresponds to a primary account identifier. The pseudo account identifier may be received at a portable wireless device and may be generated by a remote server computer. The portable wireless device can receive the pseudo account identifier over a first network and provide the pseudo account identifier to an access device. The access devices generally comprise a reader that can receive the pseudo account identifier, and thereafter send a message to request authorization of a transaction. The authorization request message may include the pseudo account identifier and is sent to a payment processing network. The authorization request message is sent to the payment processing network over a second network. The payment processing network may then process the authorization message and return a response that indicates if the transaction is authorized or not.

Another example of mobile payment system is using the emerging technology named "Near Field Communication (NFC). For example, the patent application "Secure near field communication transactions with authentication", US 20130012126 by Michelle Fisher and Rathin Guha is an example of such a solution. The basic idea is to hold for example mobile terminals close to another unit and use for example magnetic waves when transferring information between units. The distance may then be very short, for example in the range of millimetres, and the short distance provides some security against spyware in spying devices listening to transaction details.

The technical and functional challenges of providing simplified purchase systems that are general in its nature, and can be used regardless of the nature of the items and services that are involved in transactions in different respective stores, or from respective service providers, or enterprises and users are many. The different examples of simplifications given above are specialized systems that sometimes require equipment to be installed by both parties, i.e. the shop and customer, and can seldom be used by different types of shops and in different purchase situations at other locations. For example, shopping in a grocery shop results quite often in a larger number of different items compared to a situation where a driver of a car has to pay for driving on a toll road when passing a toll collecting station. Then the item to be paid for is just one, i.e. the toll road fee, and the amount to be paid can be fixed or variable dependent on how many kilometres the driver will use or have used on the toll road.

However, transactions consist of the following steps and information elements as illustrated in the examples above:
- The supplier identifies the amount to be paid by a consumer.
- The consumer provides payment details to the supplier.
- The supplier activates the payment details in such a manner that the money ends up on an account belonging to the supplier.

It is known many technical solutions providing cost effective registration and accumulation of the amount of money to be paid by a customer.

There is also known many cost effective solutions in providing effective and secure transactions between a POS terminal and bank or credit institutions.

The real challenge from a security point of view is the security issue arising when handing over payment details from the consumer to the supplier. These steps seems necessary to be able to link the amount to be paid with an identity of who is paying (i.e. from which account to draw money, and which is identified by the card itself), and an identity of who is going to receive the money (i.e. to which account to transfer the money to etc., which may be identified by the POS terminal being connected to the bank used by the supplier over an encrypted direct link. The security risk is therefore the identities of the consumer and the supplier linked to their respective account numbers. This kind of information can be misused. The steps in the transactions as described uses the POS terminal as a meeting point collecting respective information elements in the information flow, wherein the respective information elements are linked together before being transmitted in a secure manner to a payment system facilitating the transfer of money from the consumer to the supplier.

However, all these transactions are characterized by comprising respective open and secured communication links and transactions. The open communication is related to the fact that a customer collecting items in a grocery store is visible and the accumulation of the prices in a cash register at the exit from the store is also visible. At a toll road collecting station the fee to be paid is usually displayed on a publically visible screen. If the customer pays in cash there is no need for a secured or secret communication or transaction. However, it is beneficial for example for the grocery store (or the toll road system and others) that as much as possible of the cash is paid by electronic means, i.e. credit or debit cards, to avoid the problem of securing and transporting cash to the bank handling the economy of the grocery store or other respective companies.

There is also an aspect of this transaction scheme that the bank of the grocery store for example can receive money from a specific credit or debit card belonging to another bank or credit institution than used by the grocery store itself. Usually there is cooperation between banks through common networking companies, often denoted "payment processing network", thereby enabling transfer of money between POS terminals and different banks and accounts. It is also known specialized companies like PayPal that can provide payment services. This system works also perfectly well across borders and continents. In some countries it can happen that each shop or retail outlet needs a plurality of different POS terminals linked up to specific corresponding banks of the respective cards.

This situation illustrates also the necessity to collect and format information related to the purchase. The information stored in the credit or debit card must be transferred from the POS terminal together with an identification of which store and POS terminal the request for transfer of money originates from. Then the bank networking company for example, can access the correct bank or credit card Company associated with the card used by the customer, and the money for the purchase can be transferred to the correct bank and bank account of for example the grocery store. Further, a message indicating that the transaction is approved by a bank or credit institution is sent back to the shop or POS terminal that can display for example a text like "ok".

Therefore, it is common to have a rather complex technical infrastructure facilitating the electronic transfer of money when in reality it is only to pay a certain amount of money that can be handed over the counter as the alternative. This is actually simpler than the "One Click" concept, but the use of credit cards or debit cards, or loyalty program cards has so many other benefits compared to using cash both for the customer and respective stores.

Hence, an improved payment system would be advantageous, and in particular a more efficient and/or secure transaction system would be advantageous. Document US2010274652 discloses a server based announcement and payment processing system where announcement of offers to a receiving consumer is undertaken when there has been a satisfaction of an announcement condition, such as the consumer being determined to be located within a predetermined spatial zone. The content of the announcement may, in turn, facilitate a subsequent cashless transaction for resources of merchants.

### OBJECT OF THE INVENTION

It is a further object of the present invention to provide an alternative to the prior art.

In particular, it may be seen as an object of the present invention to provide a secured transaction system based on tracking geographical positions of consumers, and whenever a consumer is located geographical close to premises of a supplier, a server system according to the present invention is configured to establish a secure transaction system between them.

### SUMMARY OF THE INVENTION

Thus, the above described object and several other objects are intended to be obtained in a first aspect of the invention by providing a secured transaction system between a supplier and consumer based on an identification of relative geographical movements of a specific supplier with respect to the supplier's geographical position.

The invention relates to a transaction and payment system according to claim 1.

According to another example of embodiment of the present invention the transaction server system is configured to provide separate transaction unions when more than one consumer is in a transaction union with a same supplier.

According to another example of embodiment of the present invention the transaction server system is configured to establish a default trusted communication link between a supplier and the transaction server system when the supplier is coming online in the transaction server system.

According to another example of embodiment of the present invention the transaction server system is configured to use different security methods when establishing a respective trusted communication link between a supplier and the transaction server system, and when establishing a trusted communication link between a mobile terminal of a consumer and the transaction server system. wherein the transaction server system further is configured to translate respective protocol signalling between the respective securities methods that are used.

According to the present invention the transaction server system is configured to acquire a sum of money to be paid from a supplier and submit this sum of money via a separate communication link to the transaction server system, wherein the transaction server system is further configured to submit the sum of money to be paid to a mobile terminal of a consumer over a separate communication link.

According to another example of embodiment of the present invention can a consumer optionally accepts a sum of money to be paid to a supplier by entering the sum of money to be paid into a mobile terminal that transfer the sum of money to the transaction server system (14), wherein the transaction server system is further configured to submit the sum of money to be paid to a payment processing network together with account details of the supplier.

According to another example of embodiment of the present invention can a consumer optionally accepts a sum of money to be paid to a supplier by sending an accept signal back to the transaction server system that executes the payment based on respective account details stored in respective data sets of respective consumer and supplier of a transaction union.

According to another example of embodiment of the present invention wherein a mobile terminal of a consumer is arranged with an optional finger print reader, wherein the mobile terminal is arranged to issue an acceptance of a transaction from a consumer when the consumer touches the finger print reader and is recognized.

According to another example of embodiment of the present invention wherein a mobile terminal of a consumer is arranged with an optional three dimensional face recognition system, wherein the mobile terminal is arranged to issue an acceptance of a transaction from the consumer (15) when the three dimensional face recognition systems recognizes the consumer.

According to another example of embodiment of the present invention wherein a trusted communication link between mobile terminals of respective consumers are established when consumers passes a periphery side of a defined supplier field of a supplier, and is maintained as long as there is a transaction union between respective consumers and the supplier.

According to another example of embodiment of the present invention wherein the transaction server system is further arranged to qualify a geographical position of a consumer coming in a transaction union by comparing geographical position data received from a mobile terminal of the consumer with data obtained with a cell phone tower triangulation method and/or a similar location methods in a hybrid positioning system located at premises of a supplier.

According to another example of embodiment of the present invention wherein an acceptance of a transaction by a consumer includes a transmission of a token identifying the transaction from the transaction server system sent to a mobile terminal of the consumer over a trusted network between the mobile terminal and the transaction server system, wherein the consumer can hand over the content of the token to persons working for a supplier which can enter the content of the token into a configured system of the supplier thereby confirming and ending the transaction.

According to another example of embodiment of the present invention wherein an acceptance of a transaction by a consumer includes a transmission of a token identifying the transaction from the transaction server system (14) to a configured server located at premises of a supplier (10).

According to another example of embodiment of the present invention wherein a supplier can define additional supplier fields enabling sharing of payment between a numbers of consumers being in a union with the supplier.

According to another example of embodiment of the present invention wherein a supplier is a restaurant and a modelled supplier field is equivalent to a shape and size of respective restaurant tables, and a number of consumers in a union with this supplier field is equivalent to the number of consumers that are sitting by the respective restaurant tables.

According to another example of embodiment of the present invention wherein a supplier in addition to a modelled supplier field has a modelled interest field, and wherein any number of consumers may from interest unions with the supplier, thereby enabling direct targeted information from the supplier to respective consumers within the interest union.

Respective aspects of the present invention may each be combined with any of the other aspects. These and other aspects of the invention will be apparent from and elucidated with reference to the embodiments described herein.

### BRIEF DESCRIPTION OF THE FIGURES

The payment system according to the present invention will now be described in more detail with regard to the accompanying figures. The attached figures illustrates an example of embodiment of present invention and is not to be construed as being limiting to other possible embodiments falling within the scope of the attached claim set.
Figure 1 illustrates an example of a concept of a union.
Figure 2a illustrates an example of data sets according to the present invention.
Figure 2b illustrates how unions may form unions.
Figure 2c illustrates how a union can be split.
Figure 3 illustrates examples of data sets according to the present invention.
Figure 5 illustrates an example of how to control unions.
Figure 6 illustrates an example of a transaction system according to the present invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

According to an aspect of the present invention, an establishment of a union according to principles outlined in the European patent application 13152551 between a registered user and a supplier, like a petrol station and similar places, can for example be established between the user, and a supplier and banks or credit companies, wherein a communication link in the established union in the server according to the present invention divides communications over the communication link into open and/or secured communications, wherein the secured communications as much as possible takes place within the server itself behind a firewall and within the concept of a transaction union according to the present invention.

Some of the key features of this concept is that consumers may be anonymous when communicating with suppliers, and can therefore enter and leave transaction unions without the need for others to be signalled about this event, or that there is a need of authenticating users entering or leaving transaction unions The hidden feature is the automatic establishment of the communication link when the transaction union is established. It is further important to notice that the transaction unions that are established as such only are modelled and exists within the server itself. It is based on the tracking of the geographical positions and corresponding defined size of consumer fields and supplier fields around the tracked positions of the consumer (and or a mobile supplier, for example an ice cream van) that the server can use to create the transaction unions within the server itself. If the consumer moves away from a supplier (or a supplier moves away from a consumer) there will be no more a transaction union between them and the transaction possibilities between them are upheld. Therefore, transaction unions last only for a limited time interval.

Within the concept of a union according to the present invention, Point of Interest (POI) locations like a petrol station etc. can also be registered users of the server establishing unions. Some POI locations are fixed to a stationary geographical position, and the tracking of the GPS position of the POI is therefore merely a registration of the corresponding GPS coordinates of the geophysical position of the POI when the POI is registered as a member. It is also obvious that the fixed position also provides a simple way of identifying a name or function or type of POI that is located on this fixed position (for example type of shop). For example, a petrol station may define a field of view, and/or a service field, and/or an interest field, and/or a supplier field etc. For example, a service can be having a Point of Sale (POS) terminal that can accept payments with VISA cards, or other credit cards, or debit cards from certain banks, or that the petrol station accepts loyalty cards etc. The POI can also register an account number the POI wishes money to be deposited on when being paid for services or for items sold to customers. The respective services and/or functions may be defined in a user profile of a POI registering a field of services, field of suppler etc. as mentioned above in the server system according to the present invention.

A user can register as a consumer in addition to be registered as a road user for example, and can define a field of interests and also the consumer field in addition to the field of view as a road user etc. The field definitions can be configured to have options related to receiving information from Point of Interest locations and/or receiving information like petrol prices from petrol stations, and the user can also register card details of one or more credit or debit cards, and/or loyalty cards, or simply a bank account the user can withdraw money from when involved in a payment transaction. The registration can also include a limit of the amount of money the user accepts to pay in one transaction.

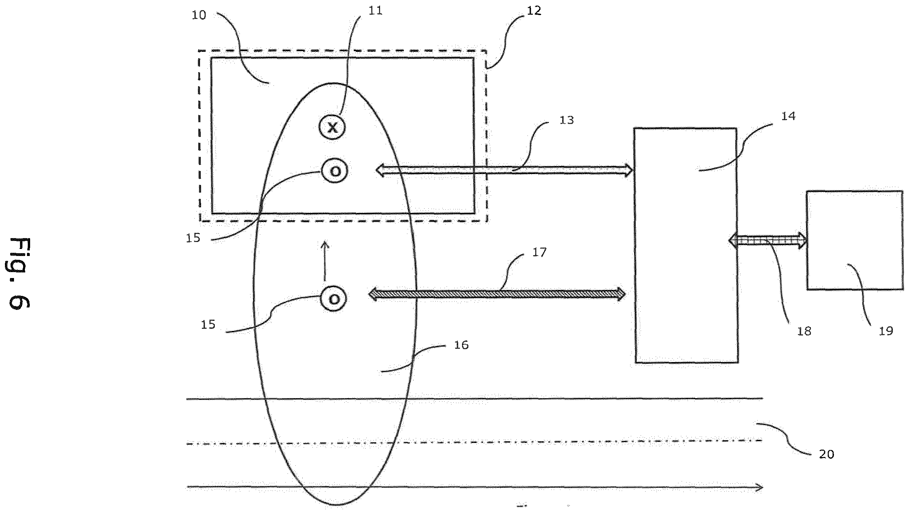

When a supplier registers as user of the system he may define a field of services or supplier as a geometrical shape around his premises. If it is within a building the supplier operates, the shape of the field could simply be a rectangle aligned along the walls in a correct distance from the GPS coordinates of the centre of the building. He can also register himself as POI, but then the POI field if interest would probably be a circle extending far out from the building into surrounding roads. In this manner he can reach road users of the system driving on the roads around his POI. With reference to Figure 6, a POI 10 has defined two fields around the centre point 11 of a building housing the POI 10. A supplier field 12 follows the contour of the walls of the building while an interest field 16 extends from the building and out over a road 20. In this manner a car driving on the road can be informed about offers from the POI 10 when the interest field 16 is intersecting the road user's interest field.

When a user registers as a user, the user can define a field of consumer which can be linked to mobile terminals the user will carry on him, for example his mobile phone. The telephone number will be part of the registration. The consumer field around the mobile terminals can be large or small if necessary. The credit cards, debit cards and loyalty cards the user may have registered can be linked directly to the user ID. It is also within the scope of the present invention to register account numbers that money can be drawn from and accounts that can be updated with money (receive money). From a security point of view, a union can restrict the flow of money to be only in one direction, i.e. from a consumer to a supplier.

With reference to figure 6, if a road user 15 parks his car and enters inside a building of a POI 10, for example a petrol station, a second union between the consumer field of the driver and the supplier field 12 of the POI 10 may be established, but the second union may be restricted to sharing a single function, for example a payment system. Since the respective credit or debit cards etc. the POI 10 can accept is for example registered in the user profile of the POI 10, and the user profile of the road user 15 comprises the cards he has, the server can identify automatically if it is possible for the road user 15 to use a shared payment system or not with one of his cards. If the card the road user has registered is not supported by the POI 10 the second union may not be established by the server.

In an example the server may send a push message to the registered mobile terminals of the road user 15 indicating if the road user now is a member of the second union, i.e. is capable of paying for any purchase with any one of his registered cards.

In prior art payment transactions the main order of sequence is to identify the person that has to pay an amount of money, and who is to receive the money. This is done through a method wherein a customer hands over a credit or debit card for example to a shop keeper, or the customer uses his card in a POS terminal that is registered to the shop. Then the shop can send the card details on for example a dedicated encrypted communication line (leased line for example) to the bank that serves the shop, or to a networking company that links banks together as described above. Then the payment transaction comprise a set of information items that can be formatted into a form that can be sent electronically, and that can be interpreted and acted on by computer systems in the bank as known in the prior art.

However, the main issue is that this method requires secured communication in almost every step of the process. The card, PIN codes etc. must be kept secret and should not fall in the hands of third persons. The information registered in the POS terminal should not be able to be spied on from the terminal, for example with the help of skimming equipment as known in the prior art. These security issues make this simple transaction model and process into a difficult process requiring added process costs for the participants as well as investment in surveillance and counter measures at the POS terminal to avoid the problems.

The real challenge from a security point of view is the security when handing over payment details from the consumer to the supplier. These steps seems necessary to be able to link the amount to be paid with an identity of who is paying (i.e. from which account to draw money), and an identity of who is going to receive the money (i.e. on which account to deposit the money on). The security risk is therefore the identities linked to account numbers. This kind of information can be misused. The steps in the transactions as described here use the POS terminal as the point in the information flow wherein the information elements are collected and is being linked together.

Therefore, within the concept of an established union as disclosed above it is possible to mitigate the security risks just by utilizing a different flow of information between participants and how information is collected in a union as disclosed above.

The most secure element in the example of union is the server itself. Therefore, the main idea of the present invention is to keep as much as possible of the security related information elements and needs within the server itself. The server can be protected in many ways as known to a person skilled in the art. How a server actually is secured is outside the scope of the present invention.

During operation a supplier field that comes in a union with a consumer field establishes a transaction union and a corresponding communication channel between the POI (and POS) and a mobile terminals carried by the consumer and the server. The server can then incorporate into the union a bank or credit institution, and the necessary communication link between the participants are established. The server knows the identity of the POI due to for example a fixed geographical position of the POI, the server knows the identity of the user through for example the mobile phone number, and the identity of the banking network or bank since it is the server that connects this system to a communication link the union.

Therefore, the only information element in a transaction in a transaction system in a union as illustrated above is actually only the amount the user (consumer) has to pay. Therefore, instead of letting the consumer hand over his payment details to the supplier the supplier hands over the amount to be paid to the consumer, which can be done automatically or manually, and then the consumer accepts the amount by for example pushing a symbol ("one click") on his mobile phone. This acceptance is then received by the server which then can use the stored payment details of the consumer, the supplier and bank (or payment processing network) to facilitate the accepted amount from the consumer to the account of the supplier. The acceptance can be in the form of respective different optional methods, for example like these non-limiting examples via finger print readers, three dimensional face recognition, tokens etc.

The communication interface communicating with the banking system or banks inside the server may comprise interface software that emulates a physical POS terminal. What is required is a model of a state machine emulating the interactions on both sides of the POS terminal. On one side the POS terminal is in interactions with a user using the terminal. The action of swiping a credit or debit card can be performed in the software model by just transferring the information stored in the user profile of the consumer into the state machine. When this happens the state machine can switch to a state wherein the amount to be paid is entered into the terminal. This can also be done by just transferring the amount received by the server. As an alternative, the server can send a push message to the mobile terminals. The user can then answer this push message by entering the amount of money manually via a keyboard on the mobile terminals. The amount will then be transferred over the communication link within the union to the software interface of the POS terminal. Then the state machine shifts to the next state that can be an acceptance of the amount to be paid, or acceptance with addition of tips if the POI is a restaurant for example. This addition of the amount can be achieved by the server sending a push message to the mobile terminals as disclosed above. This can appear as a SMS message on the phone, and in the SMS message there can be a link to a process that asks for the addition and the amount to add. This is known to a person skilled in the art. When the accepted amount is accepted the state machine can change to a state wherein a PIN code has to be entered. The PIN code can also be stored in the user profile and then be entered into the state machine by the server. The state machine can collect the bank account number of the supplier form the supplier profile, and then the state machine can contact the bank and send formatted information over a secured link to the bank, credit institution or network companies of the banks. Then the correct bank processes the request of payment and returns with a message indicating if the payment has been approved or not. The approval is then sent back from the bank to the state machine linked up to the communication link, and the state machine issues for example the message "OK" on a virtual screen, i.e. the state machine sends a message to the server that then can send this message to the POI or POS confirming that the transaction has been approved.

In other examples of embodiments other interfaces may be installed for communication with payment systems. Encrypted communication over GPRS networks are possible to implement, for example.

Another aspect of the present invention is how functions and identities of participants can be identified. First of all, the question about which one of the participants in the union that has to pay is defined by the user profile as the one of the participants in the union that has defined a consumer field.

Then it is the question about how the supplier can tell the consumer about the amount to be paid. In prior art the consumer submit card detail to the POS which then combine this with the amount to be paid, which the POS can receive from a cash register.

According to the present invention, the supplier first provides the amount to be paid by the consumer as a number that the supplier can send electronically to the mobile terminals, or which the consumer can enter via a keyboard on his mobile terminals as described above. This step does not need to be encrypted or secured. Then the user can accept the amount to be paid by transmitting the amount to the server. This step does not either require any security measures.

Since the mobile terminals may be connected to a unique Transmission Control Protocol (TCP) socket in an Internet environment, a driver in the server listening to the socket can identifies the user and mobile terminals the server can easily identify which user that sent the message. The server may then be configured to read out the card details from the corresponding user profile and combine this with the amount into a formatted message that is in agreement with a communication protocol the bank or credit institution that serves the specific card that is used. If the user has several cards that the POI can accept, the server can send a push message to the mobile terminals of the user via a network which can appear in the mobile terminals as a SMS message for example, and which can comprise hypertext that makes it possible for the user to select one of his cards just by touching the name of the card on the screen being highlighted in hypertext.

One interesting aspect of the present invention is that a POI that only possesses a traditional cash registry with no network connection actually can be part of this simplified payment system. In an example of embodiment the POI registers a supplier field linked with a name of the POI and a bank account of the POI plus a telephone number of the POI which can be on a landline system. When a consumer field of a user intersects with the supplier field the transaction is enabled. The consumer receives orally or see the amount to be paid on the cash register, or on a printed receipt, enters this amount in a window on his mobile terminals that is sent to the server, and based on the geographical position of the POI and the mobile terminals number, correct payment information is collected from the user profiles of both the participants and a direct debit operation can take place from the bank of the consumer to the bank account of the supplier. The supplier would of course need a receipt that the payment has occurred. This can be achieved via a voice message that can be played over the example of analogue landline telephone system mentioned above. When the transaction is processed the supplier waits by his phone to ring, and when it rings and the supplier answers the call he will be able to hear for example "The payment is accepted", and the consumer can leave the POI.

In a larger store that is registered as a supplier of the system according to the present invention, it is possible that there is a plurality of consumers of the system that want to pay simultaneous. This situation can be resolved by the server through a limitation process of the unions.

The sever will then establish one individual union with the store for each consumer when the intersection of the consumer field and the supplier field occurs. Therefore, there will be respective instances of the transaction system in each respective created union. Therefore a union for a transaction system is limited in the number of maximum three members, the supplier, the consumer and the server (or bank). The server can administer this situation on a first come first leave basis. The first consumer that enters the supplier is assigned to a union instance number one, the next consumer to a union instance number two and so on. When the server is addressing and keeping consumers apart, the respective TCP socket numbers of each instance of the unions may be used for example. When a consumer leaves the supplier premises, the corresponding union terminates automatically.

However, sometimes it can be of interest to have more than one consumer in a union with a supplier. For example, when a group of friends are going to a restaurant together it could be nice to have a simplified payment system that simplifies the sharing of the restaurant bill.

In the examples of unions discussed above, the resolution between different consumers on the premises of a supplier was accomplished by separate individual unions. In the restaurant environment it is possible to add the positions of consumers inside the physical area the supplier has defined as his supplier field. The GPS system does not function so well inside buildings. Outside buildings it is possible to achieve a resolution between two to seven meters. Inside buildings it is difficult. However, there are many known hybrid locating systems that combine GPS on the outside of buildings with systems inside buildings providing accurate tracking and positions of for example people carrying Radio Frequency Identification tags (RFIDS) or mobile terminals, or equipment with wireless communication ports. See for example the link http://en.wikipedia.org/wiki/Hybrid_positioning_system.

In his manner it is possible for a restaurant to define positional zones covering each table in the restaurant. According to an example of embodiment of the present invention, each such zone is then defined in the server according to the present invention as supplier fields. Each field will then be identified with a hybrid system identified position of the centre of the tables within the supplier field of the restaurant. Each such table will then be defined with a supplier field aligned with the positional zone division, i.e. the supplier field follows the counter around the table. Each such supplier field will by default be in a union with the whole supplier field defined for the entire restaurant. When guests that are members of the system sit down at the table there will be created a union between for example four guests and the supplier field of the table. The service provided for within the supplier field of a table will be for example a payment sharing process. Other services could be to electronically transfer a menu that the consumers can choose from by touching and scrolling the menu on their mobile terminal screens. Such communications can be facilitated by wireless communication ports (WIFI), and be addressed only to the zone of the table.

When the meal ends the persons sitting at the table can receive the bill electronically to their individual mobile terminals, for example via push messages. They can then engage in a discussion about how to share the bill. For example divide the amount with the number of people sitting at the table, or they select on the bill which item they want to pay for. When all selected items are submitted to the restaurant, the payment system of the restaurant can identify each person's respective individual bill based on the individual selections of items. Then each individual bill can be submitted back to each respective consumer based on the telephone numbers they have, or any other identification that is used in the union. Then each customer can send an approval of the payment over the communication channel in the union, wherein the union is between the table field, the supplier field of the restaurant and a bank, bank network, payment system (PayPal for example) or a credit card company. According to rules for generating unions the server will look at the respective credit or debit cards each respective consumer has registered and establish a communication link to specific banks or payment systems or payment networks as discussed above. Therefore, there will be a union between the table field, the restaurant and respective cards. When payment is accepted the respective consumer can be notified by the restaurant about this when the restaurant receives the confirmation of accepted payment.

Similar concepts as described above can be made for all kinds of service providers, like for example public and private transportation systems etc.

An aspect of the present invention is that participants of a transaction system according to the present invention are identified according to relative geographical positions between a supplier and a consumer. Since it is an identification of a union respective functionalities and rules of actions can be assigned to data sets of members of unions thereby facilitating a matching and assembly of transaction information elements associated with a transaction. Therefore, the account numbers, card details etc. are never revealed to any of the participants in a transaction union and are kept inside the server behind a security fence.

Therefore, from a security point of view, no one can make unauthorised access to this information. It is only the registered and authenticated members of the server system according to the present invention that has access to their own information. Further, no members of a union can share this information.

There are then two other information elements that has to be assembled to be able to execute a transaction in the server. The supplier must submit the amount to be paid to the server, and the consumer must submit an acceptance of the payment to the server. Then the server can execute the transaction.

From a security point of view it is impossible to fake a fixed geographical position of a stationary object like a shop, supermarket shopping mall, etc. since this information is also stored behind the security fence of the server. However, the actual geographical position within the premises of a supplier can be different from a geometrical centre point of for example a building used by the supplier. The actual position point can be a randomly generated position within the premises of the supplier stored in the server. Therefore, any one that tries to alter a user profile of a supplier can be asked to reveal which position that is registered in the name of the supplier. Therefore, with reference to Figure 6, the communication channel 13 between for example a stationary POI 10 (or any other supplier) to a server 14 may be a trusted encrypted communication line established as known in the prior art. For example, the line 13 can be established according to a same security standard as is provided for when a POS terminal transmits data to a payment system. Further, any security measures on a communication line 17 between a mobile terminals and the server 14 can be different than those in the communication line 13. When a union is created between the POI 10 and the consumer 15, the union exist behind the security fence of the server, and within the server any information passing between communication line 13 and communication line 17 can be decrypted/encrypted etc. such that information can be transmitted between different security systems applied in the communication links in a union.

Therefore, the amount to be paid that a POI requests can be transmitted to a server 14 in a trusted manner.

If the amount to be paid is delivered from the POI to the mobile terminals of the consumer, this can be done over the trusted communication line 13 via the server 14 and then to the mobile terminals of the consumer 15. Then the consumer can accept the amount to be paid just by a "click" on the display of the phone.

From a security point of view, the amount to be paid will usually be available on a display visible to the consumer in the POI. Therefore, it is also possible for the consumer to type the amount on his phone and submit the amount as the acceptance to the server 14. It is possible that a consumer can receive, as a reply of the acceptance, a message or token identifying the transaction from the transaction server system (14). Then the consumer (15) can hand over the token to persons working at the premises of the supplier (10). When this happens the token can be entered into the system of the supplier thereby signalling that the transaction is finished. Therefore, there can be a physical and visible part of qualifying transactions according to the present invention.

From a security point of view it is possible for Malicious Software (malware) to intercept operations in mobile terminals. When a person is shopping it is possible to try to pay for the purchases with another members payment registrations in the server. To be able to do this the malware needs to form a union in the name of another user of the system. For example, if the malware is inside a proper user's mobile terminal there will be a step of providing a "one click" operation that would be visible on the display of the mobile phone. Therefore, the proper user would see that a purchase is going on that he himself has not initiated. Further, a process of providing a "one click" by touching the display of the mobile phone can be secured for example by using fingerprint detection. Smartphones are starting to be equipped with fingerprint readers. Another choice can be three dimensional phase recognition techniques. Many smart phones have cameras on both sides of the phone. When doing this kind of identification a short video stream capturing different angels of a person's face is used to do the recognition. Therefore, there exist simple but secure methods of linking the "one click" operation to the physical owner of the payment details located behind the secure fence of the server.

Another emerging technology is to hide a personal encrypted identification inside a SIM (Subscriber Identity Module) card installed in phones. It can be required that this code is part of the "one click" procedure, and to be able to read the identity code out of the SIM card a personal password or PIN code must be entered, for example with an additional PIN code from a PIN code calculator. In some examples of applications, the identification code can be secured with the fingerprint.

Further, with reference to figure 6, the communication link 17 between a consumer 15 and a server 14 is established as a trusted communication link.

This requires an authentication of the consumer carrying the mobile terminals.

This step is performed, in accordance to the invention, when a union is created, for example when the consumer passes the border of the supplier field 12. Then the server can signal the consumer about the union and ask if the consumer wants to use the service. Then there will be a process of authenticating the user (for example with a secret question, pin codes, pin code calculators, fingerprints face recognition etc.) and the mobile unit to be part of the trusted communication link as known in prior art. This authentication needs only to be done once when inside the supplier field 12. When a consumer leaves or depart from the supplier field the trusted communication link 17 will be deactivated. This feature can for example be of advantage for a consumer doing shopping in a huge shopping mal. When entering the shopping mall the trusted link to the server is established and is up and running all the time the user is within the shopping mal. Respective suppliers (shops) inside the shopping mall will use their own secured communication links to the server. As disclosed above, the server can translate information and messages passing between the respective secured networks in a union.

Another possibility with malware is that the geographical positions provide for by a GPS transmitter and/or a hybrid positioning system is overrun, i.e. the malware replace the geographical positions with fake positions. In this manner it is possible for the malware to operate in another mobile terminal, but via the fake coordinates manage to be part of a transaction union. However, in an example of embodiment of the present invention the server may qualify geographical positions of a mobile unit without interfering with the mobile terminals itself. For example, by using cell phone tower triangulation a geographical position of a mobile terminal can be detected within a resolution of typical 25 to 100 meters accuracy. This is sufficient to establish that the GPS coordinates or coordinates from a hybrid system is consistent with the fact that the mobile terminals is located inside a union with a genuine supplier. Further, hybrid positioning systems can also be used to identify the position of mobile terminals with accuracy within meters, and even within centimetres. Together with personal identifications like fingerprint readers the malware threat is minimal. It is also possible for the server to track and record historic position data of a mobile terminal, for example the last hour of movements. If malware intercepts geographical positions from a GPS transmitter, the server would probably discover an abrupt change in movement pattern of the phone. Further, with reference to the "One Click" procedure, the identity of the person actually accepting the purchase must be confirmed, for example via a finger print reader.

If the phone is stolen then the consumer can inform the system about the incident, and any union with this phone will be impossible. Further, if someone tries to use the phone in a payment transaction according to the present invention, the person in question must bring the phone personally to premises of a supplier to be able to misuse the transaction union. This incident can be detected by the server and an alarm can be issued to the supplier and security people working at the premises of the supplier can identify the position of the phone within the building of the suppler and can catch the thief.

It is also important to have in mind that the payment within a transaction union is always in one direction from the consumer to the supplier. Therefore, there is no risk that any money will end up in other types of accounts and those belonging to registered suppliers in the system. Further, when a payment has been accepted by a consumer the supplier will expect a confirmation via the secured network 13, and when receiving this confirmation a confirmation message with transaction details can be stored as part of the user profile of the consumer.

If the supplier is a movable supplier, for example an ice cream van driving around neighbourhoods selling ice cream, the trusted communication link 13 can be established when the ice cream van starts the operations of the day, for example via an authentication of the driver (finger prints etc.). When a consumer enters the supplier field of a mobile supplier, the required "on click" operation can be linked to the type of supplier that requests the payment. When there is a question of smaller amount of money the required degree of security can be to only use a finger print reader on the mobile terminals, or type a password etc. In the corresponding data sets rules of actions can be related to the type of consumer field that is registered, for example "small scale sales". Then the consumer can add a limitation on the amount to be paid in such transactions, and also add time span limits like that it is only allowed to participate in small scale trades once every day.

However, it is within the scope of the present invention to have a downloadable application programs in the mobile terminals enabling a consumer to alter such settings on the fly. However, such modifications should only be possible through a strong authentication process of the identity of the consumer.

Such specialized unions with specialised rules concerning payment can be adapted to toll road systems, ticket systems for cinemas and theatres etc. as well as trains and tramway lines etc.

The present invention provides therefore a framework of a "one click" shopping concept that can be used in a secure manner in any type of shops or consumer and supplier environments.

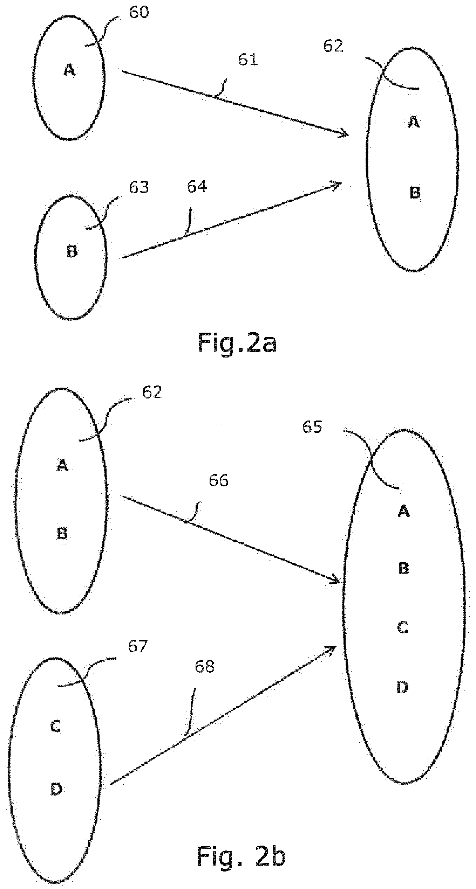

In an example of embodiment of the present invention, the user profiles registered and authenticated in the server can be viewed as sets of data. With reference to Figure 2a, set a depicted as an oval ring 60 comprises information about a specific user that has received for example an authenticated identification code ID as A. As disclosed above, the users may provide a definition of the geometrical shape of a model of a consumer field the user wants to use and which will be part of set A (for example a circle of 100 meters diameter.

Respective optional and/or mandatory additional information elements about what a user for example accept to receive of information in push messages from the server and/or other registered users, or operational aspects of the user's membership can be part of set A.

For example, a consumer (user) can block receiving for example petrol prices or other types of offers over communication channels within unions, and can for example only allow information from a certain shop, for example the grocery shop in his neighbourhood, or from a supermarket chain. Therefore, in the user profile there might be a section detailing information handling rules the user can tailor to his needs.

It is also possible to use the user profile as a storage location for updating respective relevant information for the user defined in the profile, for example updated geographical positions of the user received by the server each time the server for example queries a GPS device, or is receiving positions from a GPS device the user is carrying with him, for example a mobile terminal.

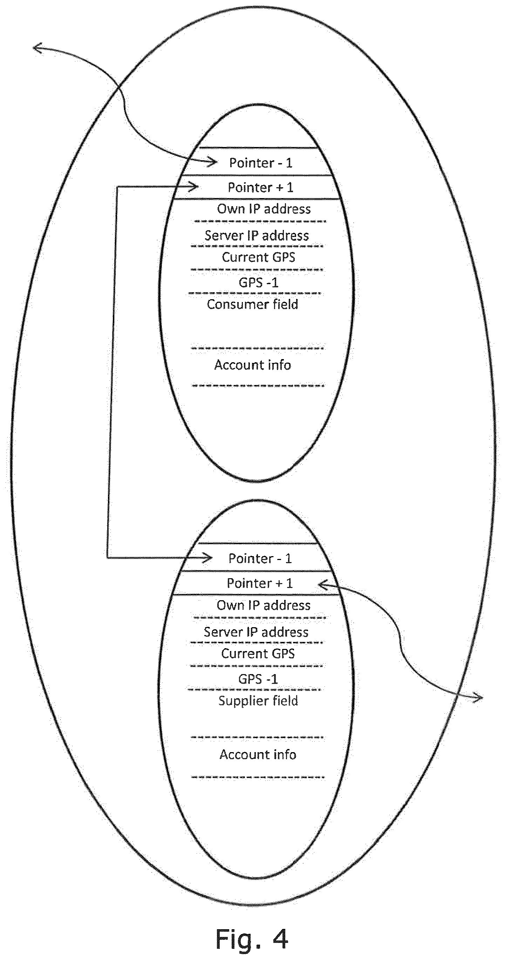

In Figure 2a there is also a registered supplier defined in set B. In Figure 2b the respective consumer in set A and supplier in set B are coming close to each other and can form a transaction union as indicated with the arrows 61, 64. Internally in the server, the transaction union that is created can be viewed as a new set U1 (reference numeral 62 in Figure 4a), (union one, for example), being in itself a set with the information elements from set A and set B. The system can then also provide an ID for the union, for example U1. The set U1 will therefore, for example comprise updated GPS positions all the time of consumers (user A) inside the data set defining consumer A. The GPS position of a supplier is usually fixed to a certain position, and any update will of course not change the value of position. However, it is within the scope of the present invention to have suppliers that can move around, for example an ice cream van as discussed above.

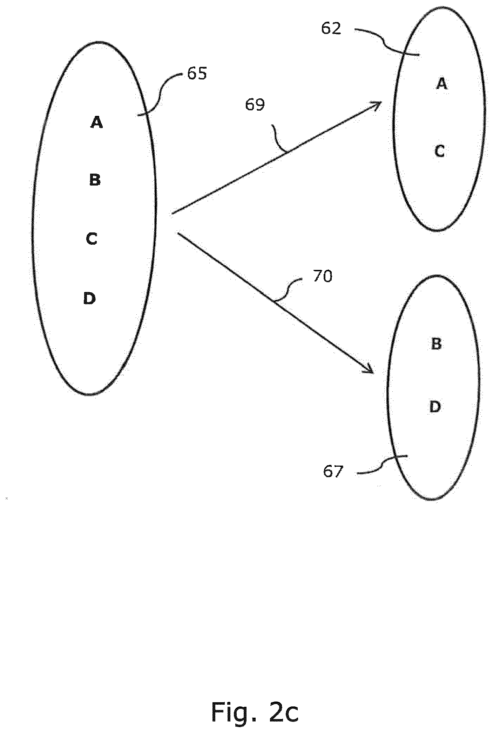

If there is a union U2, as depicted in figure 2b with reference numeral 67, between other registered users defined in corresponding sets C and D, a union U3 (reference numeral 65) may be formed between U1 and U2, which is indicated by the arrows 66, 68. In this manner the union provides a data structure enabling using a same data structure when creating unions between single users as well as when forming unions of unions. When a member of a union is leaving a union, this can be detected by the server by detecting a change in distances between respective GPS positions in the sets of users in a union, for example. The process of detecting a member of a union leaving the union can also be detected just by a process that at regular intervals re-establish a union according to the respective distance rules derived from the respective defined fields of views .This is possible since the goal of the present invention is not to keep track of individual members as such, but merely to identify unions and maintain communications inside unions. If none of the members of a union being re-established no longer satisfies the distance rules or other rules, the union is automatically dissolved since it will not be re-established. In Figure 2c it is illustrated how for example U3 is split again into separate unions U1 and U2. However, when a union is split the members in the respective unions U1 and U3 can be different from the situation when U3 was formed. In the example depicted in Figure 2c U1 now has the members A and C while U2 has the members B and D.

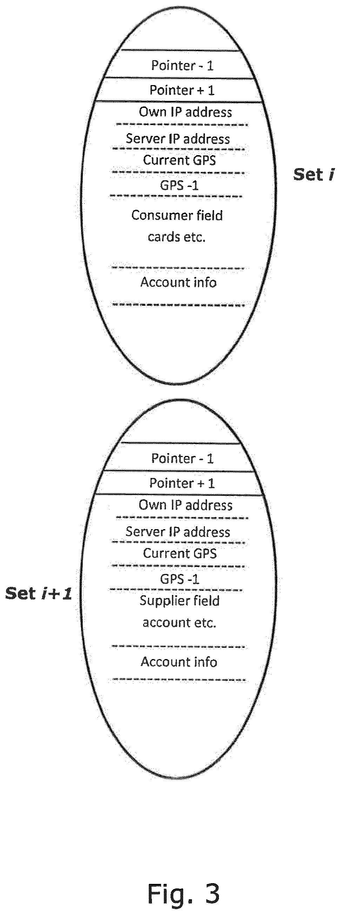

In figure 3 a data set Sᵢ is depicted and is an example of a data set related to a consumer. The information element "Own IP address" can be the Internet address assigned to mobile terminals that the consumer has registered as his GPS terminal. The information element "Server IP address" is the Internet address of a server according to the present invention that is serving the consumer. The information element "Current GPS" is the updated geographical position of the consumer at any time while the information element "GPS-1" is the geographical position just before an update is performed. In this manner it is possible to detect for example which direction the consumer moves. The information element "Account info" can have different rule definitions about perception in unions as discussed above. It is also possible to add a limit on the amount of money that consumers may allow to be drawn from own accounts or cards in transactions inside transaction unions.

The information element "Consumer field" stores the geometrical modelled consumer field and can for example be just a default definition of a circle with 100 meters radius. Other information elements like what kind of credit and debit cards the consumer has, or just an account number in a bank, or a loyalty card etc. can be stored as part of the consumer field.

The data set Sᵢ₊₁ also depicted in figure 3 is defined for a supplier. As can be seen, the structure of the data set is identical with the data structure of a consumer. The difference is that the supplier has a field definition as a supplier field. The GPS positions of a stationary shop will of course not change during updates. However, mobile shops like an ice cream van can be registered as a supplier in the system as discussed above.

According to an example, a transaction union is created simply by updating pointers as known to a person skilled in the art in each respective data set associated with a respective consumer and a respective supplier. In Figure 4 a transaction union is formed between set Sᵢ and set Sᵢ₊₁ just by assigning a pointer "Pointer+1" to Sᵢ that points to the location storing the pointer "Pointer -1" of Sᵢ₊₁. If these two sets are the only members of the created union, the pointer "Pointer-1" of Sᵢ is set to "NULL" indicating an end of the pointer chain, and the pointer "Pointer+1" of Sᵢ₊₁ is also set to "NULL" to indicate the end of the pointer chain in the other end. Therefore, the union will be bounded and be identifiable among a plurality of sets associated with a plurality of users by two pointers that are "NULL" in a respective start and end of a linked list of data sets. If a user with an associated set of data Sⱼ (not shown) is not in a union, both the pointers "Pointer+1" and "Pointer -1" of Sⱼ will by default be set to "NULL". In this simple manner it is possible to identify both single members as well as respective unions of members.

The pointer structure given as an example with reference to Figure 4 comprises a forward chain of pointers and a backward chain of pointers. In Figure 4 and in the description this has been simplified by using arrows and referring to pointers as pointing in both directions. In a practical example there will be separate chains of pointers. A person skilled in the art knows how to program and use linked lists. There is an overview disclosed in a lecture note by R. Baumann of Hochshule Für Technik, Rapperswil, "Module Info1-Informatik 1 Learning Exercise - Linked Lists" that provides code examples of typical operations with linked lists.

If the transaction union illustrated in Figure 4 is coming in a union with a third consumer with a data set Sⱼ, the field of view of the third consumer will overlap either the field of view defined in Sᵢ or Sᵢ₊₁, or be overlapping both fields of view defined in Sᵢ and Sᵢ₊₁. However, a union (Sᵢ)U(Sᵢ₊₁)U(Sⱼ) will be formed if the field of view of Sᵢ or the field of view of Sᵢ₊₁ overlaps the field of view of Sⱼ as known in set theory. Therefore, the process of determining the membership of a third consumer with a data set Sⱼ can be achieved by parsing the sets of data between the "NULL" pointers encapsulating the union and compare the respective consumer fields and supplier fields with the field definition of Sⱼ.

When a transaction union is about to be established, it is within a set of rules according to the present invention possible to demand that a transaction union can only have one supplier. Therefore, if a consumer is in a transaction union with another supplier, a membership with another supplier is only possible after the current union of the consumer terminates. If a consumer experiences that he has problems establishing new unions inside a shopping centre for example, the reason can be that his consumer field is too large. It is within the scope of the present invention that a consumer can adjust the size of his consumer field online from for example his mobile terminals. It is within the scope of the present invention to provide for example a downloading of an optional app to a mobile terminal registered with the user in a user profile of the transaction system according to the present invention. Alternatively the system allows the use of a WEB interface instead, or as a combination of a mobile app and a WEB page.

Therefore, the only required task when incorporating the data set Sⱼ is to update the «NULL» pointers in one of the ends of the linked list defining the union. Since the data set of Sᵢ has links pointing "upwards" ("Pointer-1") and "downwards" ("Pointer+1") to other data sets of other members of the union, it is possible to parse the nested pointer structure as depicted for example in Figure 6, and the pointer field "Pointer+1" of a Set Sᵢ in one end of the linked list can be set to point to the "Pointer-1" of Sⱼ while the "Pointer+1" of Sⱼ is set to «NULL». In this manner it is only necessary to identify one overlapping field of view among all fields of views in a union, and a new member is incorporated into the union just by updating corresponding pointers in the linked list defining the union. Further, the server does not need to keep track of unions as such. A union is identified by identifying one of the member of a union, for example via a GPS position related to the member, and then parse the linked list of the union in both directions until a "NULL" pointer is encountered in both ends of the list. Thereby it is possible to identify unions as well as single users (users that are not members of a union).

A similar process of updating pointers in the data sets associated with users can be performed when a union is split. For example, if the third union Sⱼ is no longer in the union, this can be identified by having a process checking consistency of unions. In an example, all unions may at regular time intervals be dissolved and then reassembled again. In this manner the unions will comprise the correct members at any given time interval. The split is achieved by updating the respective pointers in all the involved sets of data of consumers and suppliers (users). The process will even create a spilt of a union as depicted in Figure 4c into to new unions.

When a transaction union is formed the data set of a supplier in the union will have for example a link to an interface of the secured communication link (13) between the supplier and the server. In the same manner it will be a link to an interface of another secured network (17) between the consumer and the server. The server establishes also a communication link between the supplier and consumer within the union. This communication link may comprise protocol translations between the two respective secured networks.

In another example, a server according to the present invention may comprise a run time system utilizing the example of set definitions disclosed above.

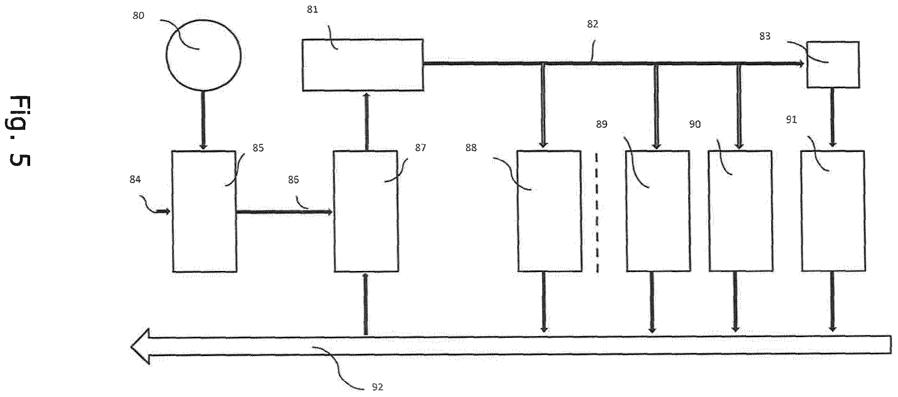

In Figure 5 a database 80 comprises respective user definitions and corresponding information of sets A, B, C etc. as given as examples above. When a user logs in or in any other way becomes an active user, the server starts to listen to for example the associated GPS unit sending GPS coordinates to the server. The associated sets of users are transferred to an active user list 85. Received GPS coordinates 84 from active users are updated in the active use list 85 in storage locations allocated for this purpose in each respective user sets as disclosed in examples above. Then the updated GPS positions together with the respective user Ids and consumer and supplier field definitions are transferred over a communication link 86 to a process queue 87.

A GPS processor 81 may pick at random a pair of a supplier and a consumer with respective GPS coordinates from the process queue 87 and calculate possible overlaps of consumer fields and supplier fields between the associated user and supplier of the pair of GPS coordinates that was picked from the process queue 87. After the pair has been picked the pair is deleted from the process queue 87. Dependent on the magnitude of the distance between the pair of GPS coordinates, and the definitions of size of the field types, the respective GPS coordinates together with the associated user IDs etc. are then sorted into different priority queues 88, 89, 90. For example, if a distance between perimeters of fields are greater than 1000 meters they are put into the priority queue 88. If the distance is less than 1000 meters, but is greater than 500 meters the GPS coordinates and associated user IDs are put in the priority queue 89, while priority queue 90 can be for users with a distance less than 500 meters, but greater than 100 meters etc. If the GPS processor 81 decides that the distance (i.e. overlap) between the pairs of coordinates satisfy conditions for a union the associated users of the possible union are sent via a union rule decision process 83 that can decide if a creation of the union is allowed (rules associated with type of union, number of members etc. like for example restricting a union to only have one supplier field). When the unions are formed they are transferred to a priority queue 91.

Users from all priority queues 88, 89, 90, 91 are transferred back to the process queue 87 that will comprise single sets A, B, C etc. and/or unions U1, U2, U3 etc. mixed with newly activated users from the active user list 85. The received GPS coordinates 84 used to update the active user list 85 is associated and transferred with respective user IDs. If a specific user ID is not in the active user list, the server can be configured to search the process queue 87 and update GPS coordinates if the user ID is in this queue. The GPS processor is also configured to reveal that an existing union no longer fulfils the requirement with respect to distances. If this happens, the union is dissolved and those members that still fulfil the requirement of being in a union will end up in unions after passing the union rule process 83. An example of how this process can generate unions is depicted in Figure 2c.

The respective priority queues 88, 89, 90, 91 are all circulated. Output from the priority queues are transferred back to the process queue 87 via a communication link 92. Since it is probable that users with a distance between periphery of fields that is greater than for example 1000 meters, there will probably take some times in the traffic to be able to form a union, the circulation of the priority queue 88 is slower than the other priority queues 89, 90 that are circulated quicker. In this manner there will be a random shifting of users being in the process queue 87.

Unions are also circulated and an output from the union list 91 is transferred via the communication link 92. Since it is probable that a union will be active for a while, the unions are circulated slower. The speed of circulating the respective queues can be tuned in an example. Besides providing priority between users, this example of embodiment also provides a load distribution of the system.

The link 92 can be a message buss, for example implemented inside a publisher and subscriber architecture as known to a person skilled in the art. This enables a simple expansion of the system, also over networks to other servers. In an example, there are assigned different servers to different geographical regions. In this manner the message system 92 may be connected to similar systems in another servers enabling transfer of a user or a union to the other server when a consumer or supplier is leaving the geographical area covered by the present server.

According to another example, all processing modules and/or functional units as well as sets defining users and unions are integrated into the system as units communicating over an Internet with an Internet protocol, for example using standard protocols for WEB services. In this manner scalability is maintained over separate server systems and within servers, and the implementation requires only communication between unique identified and definable addresses in the structure, as known to a person skilled in the art.

## Claims

1. A transaction and payment system comprising a transaction server system (14) configured to provide secured payment transactions between a consumer (15) and a supplier (10),
wherein the consumer (15) and the supplier (10) respectively are registered users of the transaction server system (14),
wherein respective payment details related to user accounts of the respective users are stored in respective data sets of respective consumers and suppliers stored in the transaction server system (14),
wherein each registered consumer and supplier is registering a user defined geometrically shaped model of a respective consumer field and a supplier field, representing respective geographical spaces wherein a payment transaction can occur,
wherein the transaction server system (14) is configured to receive and update and record data of geographical positions from geographical position transmitters associated with registered consumers and suppliers, and
the transaction server system (14) is configured to follow movements of consumers based on the received and recorded geographical positions, and
whenever relative movements between a first consumer and a first supplier is providing a situation wherein the user modelled consumer field of the first consumer is partly overlapping the supplier field of the first supplier, such that the transaction server system is configured to establish a transaction and payment union between the first consumer and the first supplier within the transaction server system (14) thereby enabling a secured transaction and payment system between them comprising a first secured communication link (13) between the first supplier and the transaction server system (14), and a second secured communication link (17) between the transaction server system (14) and the first consumer, wherein the second secured communication link (17) is established by authentication of the first consumer when the transaction and payment union is created,
wherein the secured transaction and payment system includes a first transfer of a sum to be paid by the first consumer from the first supplier to the first consumer via the first secured communication link (13) between the supplier and the transaction server system, wherein the transaction server system (14) is further configured to submit to the consumer via the second secured communication link (17) the sum of money to be paid, wherein the first consumer authenticates the sum to be payed by a second transfer transferring an accept of the payment to the transaction server system via the second secured communication link (17),
when the consumer accept is received by the transaction server system, the transaction server system is configured to collect the stored payment details stored in the data sets of the respective first supplier and the first consumer, and to finalize the payment by transmitting the transaction details regarding the payment to a payment processing network,
the transaction server system (14) is further configured to cancel the secured transaction and payment system if the relative movement of a consumer with respect to a transaction and payment union as detected by the transaction server system (14) is providing a situation where there is no longer a partly overlapping of the consumer field and the supplier field constituting the transaction and payment union.

2. The transaction and payment system according to claim 1, wherein the transaction server system is configured to provide a second transaction and payment union when a second consumer is in a transaction and payment union with the first supplier.

3. The transaction and payment system according to claim 1, wherein the transaction server system (14) is configured to establish a default trusted communication link between a supplier (10) and the transaction server system (14) when the supplier is coming online in the transaction server system.

4. The transaction and payment system according to claim 1, wherein the transaction server system (14) is configured to use different security methods when establishing a respective trusted communication link (13) between a supplier (10) and the transaction server system, and when establishing a trusted communication link (17) between a mobile terminal of a consumer (15) and the transaction server system (14), wherein the transaction server system (14) further is configured to translate respective protocol signaling between the respective security methods that are used.

5. The transaction and payment system according to claim 1, wherein the transfer of a sum of money to be paid to a supplier from a consumer comprises:
the supplier provides the sum to be paid to the consumer, and the consumer accepts the payment by entering the sum of money to be paid into a mobile terminal registered to the consumer and is transferring the sum of money to the transaction server system (14) via the secured communication link (17).

6. The transaction and payment system according to claim 1, wherein the transfer of a sum of money to be paid to a supplier from a consumer comprises:
the consumer (15) accepts the sum of money to be paid to the supplier by sending an accept signal back to the transaction server system (14), and
the supplier sends the amount to be paid to the transaction server (14).

7. The transaction and payment system according to claim 1, wherein a mobile terminal of a consumer (15) is arranged with an optional finger print reader, wherein the mobile terminal is arranged to issue an acceptance of a transaction from a consumer (15) when the consumer (15) touches the finger print reader and the finger print is recognized.

8. The transaction and payment system according to claim 1, wherein a mobile terminal of a consumer (15) is arranged with an optional three dimensional face recognition system, wherein the mobile terminal is arranged to issue an acceptance of a payment transaction from the consumer (15) when the three dimensional face recognition systems recognizes the consumer (15).

9. The transaction and payment system according to claim 1, wherein trusted communication links (17) to mobile terminals of respective consumers (15) are established when consumers passes a periphery side of a defined supplier field (12) of a supplier (10), and is maintained as long as there is a transaction and payment union between the respective consumers and the supplier.

10. The transaction and payment system according to claim 1, wherein the transaction server system (14) is further optionally arranged to qualify a geographical position of a consumer (15) coming in a transaction union comprising: comparing geographical position data received from a mobile terminal of the consumer (15) with data obtained with a cell phone tower triangulation method and/or a similar location method in a hybrid positioning system located at premises of a supplier (10).

11. The transaction and payment system according to claim 1, wherein an acceptance of a payment transaction by a consumer (15) optionally includes a transmission of a token identifying the payment transaction from the transaction server system (14),
the token is sent to a mobile terminal of the consumer (15) over the trusted network (17) between the mobile terminal and the transaction server system (14), wherein the consumer can hand over the content of the token to persons working for a supplier (10), which can enter the content of the token into a configured system of the supplier thereby confirming the payment transaction.

12. The transaction and payment system according to claim 1, wherein an acceptance of a payment transaction by a consumer (15) optionally includes a transmission of a token identifying the transaction from the transaction server system (14) to a configured server located at premises of a supplier (10).

13. The transaction and payment system according to claim 1, wherein a supplier can define additional respective supplier fields enabling sharing of payment between a number of consumers being in a union with the supplier.

14. The transaction and payment system according to claim 11, wherein a supplier is a restaurant and a modelled supplier field is equivalent to a shape and size of respective restaurant tables, and consumers in a union with this supplier field is equivalent to the consumers that are sitting by the respective restaurant tables.

15. The transaction and payment system according to claim 11, wherein a supplier (10) in addition to a modelled supplier field has a modelled interest field, and wherein any number of consumers may form interest unions with the supplier, thereby enabling transfer of direct-targeted information from the supplier to respective consumers within the interest union.

16. The transaction and payment system according to claim 1, wherein a supplier is located in a vehicle moving around, and wherein the transaction server is tracking geographical positions of the vehicle by receiving and updating geographical coordinates from a geographical position transmitter associated with the vehicle.

17. The transaction and payment system according to claim 1, wherein the user profiles of respective users comprise payment details related to credit cards, debit cards, loyalty cards, PIN codes, bank account numbers and similar payment information elements.

## Patentansprüche

1. Transaktions- und Zahlungssystem, umfassend ein Transaktionsserversystem (14), das konfiguriert ist, um gesicherte Zahlungstransaktionen zwischen einem Verbraucher (15) und einem Anbieter (10) bereitzustellen,
wobei der Verbraucher (15) beziehungsweise der Anbieter (10) registrierte Benutzer des Transaktionsserversystems (14) sind,
wobei jeweilige Zahlungsdetails, die sich auf Benutzerkonten der jeweiligen Benutzer beziehen, in jeweiligen Datensätzen von jeweiligen Verbrauchern und Anbietern gespeichert sind, die in dem Transaktionsserversystem (14) gespeichert sind,
wobei jeder registrierte Verbraucher und Anbieter ein benutzerdefiniertes geometrisch geformtes Modell eines jeweiligen Verbraucherfelds und eines Anbieterfelds registriert, das jeweilige geografische Räume darstellt, in denen eine Zahlungstransaktion erfolgen kann,
wobei das Transaktionsserversystem (14) konfiguriert ist, um Daten von geografischen Positionen von Übertragungsvorrichtungen für geografische Positionen, die mit registrierten Verbrauchern und Anbietern verknüpft sind, zu empfangen und zu aktualisieren und aufzuzeichnen, und
wobei das Transaktionsserversystem (14) konfiguriert ist, um Bewegungen von Verbrauchern basierend auf den empfangenen und aufgezeichneten geografischen Positionen zu folgen, und
immer wenn relative Bewegungen zwischen einem ersten Verbraucher und einem ersten Anbieter eine Situation bereitstellen, in der sich das benutzermodellierte Verbraucherfeld des ersten Verbrauchers teilweise mit dem Anbieterfeld des ersten Anbieters überschneidet,
derart, dass das Transaktionsserversystem konfiguriert ist, um eine Transaktions- und Zahlungseinheit zwischen dem ersten Verbraucher und dem ersten Anbieter innerhalb des Transaktionsserversystems (14) aufzubauen, wobei dadurch ein gesichertes Transaktions- und Zahlungssystem zwischen ihnen ermöglicht wird, umfassend eine erste gesicherte Kommunikationsverbindung (13) zwischen dem ersten Anbieter und dem Transaktionsserversystem (14) und eine zweite gesicherte Kommunikationsverbindung (17) zwischen dem Transaktionsserversystem (14) und dem ersten Verbraucher, wobei die zweite gesicherte Kommunikationsverbindung (17) durch Authentifizierung des ersten Verbrauchers aufgebaut wird, wenn die Transaktions- und Zahlungseinheit erstellt wird,
wobei das gesicherte Transaktions- und Zahlungssystem eine erste Übermittlung einer ersten Summe, die durch den Verbraucher zu zahlen ist, von dem ersten Anbieter an den ersten Verbraucher über die erste gesicherte Kommunikationsverbindung (13) zwischen dem Anbieter und dem Transaktionsserversystem beinhaltet, wobei das Transaktionsserversystem (14) ferner konfiguriert ist, um über die zweite gesicherte Kommunikationsverbindung (17) die Geldsumme, die zu zahlen ist, an den Verbraucher weiterzuleiten,
wobei der erste Verbraucher die Summe, die zu zahlen ist, durch eine zweite Übermittlung authentifiziert, die eine Annahme der Zahlung über die zweite gesicherte Kommunikationsverbindung (17) an das Transaktionsserversystem übermittelt,
wobei, wenn die Verbraucherannahme durch das Transaktionsserversystem empfangen wird, das Transaktionsserversystem konfiguriert ist, um die gespeicherten Zahlungsdetails zu sammeln, die in den Datensätzen des jeweiligen ersten Anbieters und des ersten Verbrauchers gespeichert sind, und um die Zahlung durch Übertragen der Transaktionsdetails bezüglich der Zahlung an ein Zahlungsverarbeitungsnetz abzuschließen,
wobei das Transaktionsserversystem (14) ferner konfiguriert ist, um das gesicherte Transaktions- und Zahlungssystem aufzuheben, falls die relative Bewegung eines Verbrauchers hinsichtlich einer Transaktions- und Zahlungseinheit, wie durch das Transaktionsserversystem (14) erfasst, eine Situation bereitstellt, in der es nicht länger ein teilweises Überschneiden des Verbraucherfelds und des Anbieterfelds gibt, das die Transaktions- und Zahlungseinheit bildet.

2. Transaktions- und Zahlungssystem nach Anspruch 1, wobei das Transaktionsserversystem konfiguriert ist, um eine zweite Transaktions- und Zahlungseinheit bereitzustellen, wenn ein zweiter Verbraucher in einer Transaktionsund Zahlungseinheit mit dem ersten Anbieter ist.

3. Transaktions- und Zahlungssystem nach Anspruch 1, wobei das Transaktionsserversystem (14) konfiguriert ist, um eine vertrauenswürdige Standardkommunikationsverbindung zwischen einem Anbieter (10) und dem Transaktionsserversystem (14) aufzubauen, wenn der Anbieter in dem Transaktionsserversystem online kommt.

4. Transaktions- und Zahlungssystem nach Anspruch 1, wobei das Transaktionsserversystem (14) konfiguriert ist, um unterschiedliche Sicherheitsverfahren zu nutzen, wenn eine jeweilige vertrauenswürdige Kommunikationsverbindung (13) zwischen einem Anbieter (10) und dem Transaktionsserversystem aufgebaut wird, und
wenn eine vertrauenswürdige Kommunikationsverbindung (17) zwischen einem mobilen Endgerät eines Verbrauchers (15) und dem Transaktionsserversystem (14) aufgebaut wird,
wobei das Transaktionsserversystem (14) ferner konfiguriert ist, um eine jeweilige Protokollsignalisierung zwischen den jeweiligen Sicherheitsverfahren zu übersetzen, die genutzt werden.

5. Transaktions- und Zahlungssystem nach Anspruch 1, wobei die Übermittlung einer Geldsumme, die an einen Anbieter zu zahlen ist, von einem Verbraucher Folgendes umfasst:
der Anbieter stellt dem Verbraucher die Summe bereit, die zu zahlen ist, und der Verbraucher nimmt die Zahlung durch Eingeben der Geldsumme, die zu zahlen ist, in ein mobiles Endgerät, das auf den Verbraucher registriert ist, an und übermittelt die Geldsumme über die gesicherte Kommunikationsverbindung (17) an das Transaktionsserversystem (14).

6. Transaktions- und Zahlungssystem nach Anspruch 1, wobei die Übermittlung einer Geldsumme, die an einen Anbieter zu zahlen ist, von einem Verbraucher Folgendes umfasst:
der Verbraucher (15) nimmt die Geldsumme, die an den Anbieter zu zahlen ist, durch Senden eines Annahmesignals zurück an das Transaktionsserversystem (14) an, und
der Anbieter sendet den Betrag, der zu zahlen ist, an den Transaktionsserver (14).

7. Transaktions- und Zahlungssystem nach Anspruch 1, wobei ein mobiles Endgerät eines Verbrauchers (15) mit einem optionalen Fingerabdruckleser eingerichtet ist, wobei das mobile Endgerät eingerichtet ist, um eine Annahmeerklärung einer Transaktion von einem Verbraucher (15) auszustellen, wenn der Verbraucher (15) den Fingerabdruckleser berührt und der Fingerabdruck erkennt wird.

8. Transaktions- und Zahlungssystem nach Anspruch 1, wobei ein mobiles Endgerät eines Verbrauchers (15) mit einem optionalen dreidimensionalen Gesichtserkennungssystem eingerichtet ist, wobei das mobile Endgerät eingerichtet ist, um eine Annahmeerklärung einer Zahlungstransaktion von dem Verbraucher (15) auszustellen, wenn die dreidimensionalen Gesichtserkennungssysteme den Verbraucher (15) erkennen.

9. Transaktions- und Zahlungssystem nach Anspruch 1, wobei vertrauenswürdige Kommunikationsverbindungen (17) zu mobilen Endgeräten von jeweiligen Verbrauchern (15) aufgebaut werden, wenn Verbraucher eine Umfangsseite eines definierten Anbieterfelds (12) eines Anbieters (10) passieren, und beibehalten werden, solange eine Transaktions- und Zahlungseinheit zwischen den jeweiligen Verbrauchern und dem Anbieter besteht.

10. Transaktions- und Zahlungssystem nach Anspruch 1, wobei das Transaktionsserversystem (14) ferner optional eingerichtet ist, um eine geografische Position eines Verbrauchers (15) zu qualifizieren, der in eine Transaktionseinheit kommt, umfassend:
Vergleichen von Daten von geografischen Positionen, die von einem mobilen Endgerät des Verbrauchers (15) empfangen werden, mit Daten, die mit einem Handymasttriangulationsverfahren und/oder einem ähnlichen Ortungsverfahren in einem hybriden Positionierungssystem erhalten werden, das sich auf einem Gelände eines Anbieters (10) befindet.

11. Transaktions- und Zahlungssystem nach Anspruch 1, wobei eine Annahmeerklärung einer Zahlungstransaktion durch einen Verbraucher (15) optional eine Übertragung eines Tokens, das die Zahlungstransaktion identifiziert, von dem Transaktionsserversystem (14) beinhaltet,
wobei das Token über das vertrauenswürdige Netzwerk (17) zwischen dem mobilen Endgerät und dem Transaktionsserversystem (14) an ein mobiles Endgerät des Verbrauchers (15) gesendet wird,
wobei der Verbraucher den Inhalt des Tokens an Personen übergeben kann, die für einen Anbieter (10) arbeiten, die den Inhalt des Tokens in ein konfiguriertes System des Anbieters eingeben können, wobei dadurch die Zahlungstransaktion bestätigt wird.

12. Transaktions- und Zahlungssystem nach Anspruch 1, wobei eine Annahmeerklärung einer Zahlungstransaktion durch einen Verbraucher (15) optional eine Übertragung eines Tokens, das die Transaktion identifiziert, von dem Transaktionsserversystem (14) an einen konfigurierten Server beinhaltet, der sich auf dem Gelände eines Anbieters (10) befindet.

13. Transaktions- und Zahlungssystem nach Anspruch 1, wobei ein Anbieter zusätzliche jeweilige Anbieterfelder definieren kann, die eine Aufteilung der Zahlung zwischen einer Anzahl von Verbrauchern ermöglichen, die in einer Einheit mit dem Anbieter sind.

14. Transaktions- und Zahlungssystem nach Anspruch 11,
wobei ein Anbieter ein Restaurant ist und ein modelliertes Anbieterfeld einer Form und Größe von jeweiligen Restauranttischen entspricht, und Verbraucher in einer Einheit mit diesem Anbieterfeld den Verbrauchern entsprechen, die an den jeweiligen Restauranttischen sitzen.

15. Transaktions- und Zahlungssystem nach Anspruch 11,
wobei ein Anbieter (10) zusätzlich zu einem modellierten Anbieterfeld ein modelliertes Interessenfeld aufweist, und wobei eine beliebige Anzahl von Verbrauchern Interesseneinheiten mit dem Anbieter ausbilden kann, wobei dadurch die Übermittlung von zielgerichteten Informationen von dem Anbieter an die jeweiligen Verbraucher innerhalb der Interesseneinheit ermöglicht wird.

16. Transaktions- und Zahlungssystem nach Anspruch 1, wobei sich ein Anbieter in einem Fahrzeug befindet, das sich bewegt, und wobei der Transaktionsserver geografische Positionen des Fahrzeugs durch Empfangen und Aktualisieren von geografischen Koordinaten von einer Übertragungsvorrichtung für geografische Positionen verfolgt, die mit dem Fahrzeug verknüpft ist.

17. Transaktions- und Zahlungssystem nach Anspruch 1, wobei die Benutzerprofile von jeweiligen Benutzern Zahlungsdetails umfassen, die sich auf Kreditkarten, Debitkarten, Kundenkarten, PIN-Codes, Bankkontonummern und ähnliche Zahlungsinformationenelemente beziehen.

## Revendications

1. Système de transaction et de paiement comprenant un système de serveur de transaction (14) configuré pour procurer des transactions de paiement sécurisées entre un consommateur (15) et un fournisseur (10),
le consommateur (15) et le fournisseur (10) étant respectivement des utilisateurs enregistrés du système de serveur de transaction (14),
les détails de paiement respectifs liés aux comptes utilisateurs des utilisateurs respectifs étant stockés dans des ensembles de données respectifs des consommateurs et des fournisseurs respectifs stockés dans le système de serveur de transaction (14),
chaque consommateur et fournisseur enregistrés enregistrant un modèle de forme géométrique défini par l'utilisateur d'un champ de consommateur respectif et d'un champ de fournisseur, représentant des espaces géographiques respectifs dans lesquels une transaction de paiement peut se produire,
le système de serveur de transaction (14) étant configuré pour recevoir et mettre à jour et mettre en registre des données de positions géographiques à partir de transmetteurs de position géographique associés à des consommateurs et des fournisseurs enregistrés, et
le système de serveur de transaction (14) étant configuré pour suivre les mouvements des consommateurs sur la base des positions géographiques reçues et mises en registre, et
chaque fois que des mouvements relatifs entre un premier consommateur et un premier fournisseur procurent une situation dans laquelle le champ de consommateur modélisé par l'utilisateur du premier consommateur chevauche partiellement le champ de fournisseur du premier fournisseur,
de telle sorte que le système de serveur de transaction est configuré pour établir une union de transaction et de paiement entre le premier consommateur et le premier fournisseur au sein du système de serveur de transaction (14) permettant ainsi un système de transaction et de paiement sécurisé entre eux comprenant une première liaison de communication sécurisée (13) entre le premier fournisseur et le système de serveur de transaction (14), et une seconde liaison de communication sécurisée (17) entre le système de serveur de transaction (14) et le premier consommateur, la seconde liaison de communication sécurisée (17) étant établie par authentification du premier consommateur lorsque l'union de transaction et de paiement est crée,
le système de transaction et de paiement sécurisé comportant un premier transfert d'une somme à payer par le premier consommateur du premier fournisseur au premier consommateur par l'intermédiaire de la première liaison de communication sécurisée (13) entre le fournisseur et le système de serveur de transaction, le système de serveur de transaction (14) étant en outre configuré pour soumettre au consommateur par l'intermédiaire de la seconde liaison de communication sécurisée (17)
la somme d'argent à payer,
le premier consommateur authentifiant la somme à payer par un second transfert transférant une acceptation du paiement au système de serveur de transaction par l'intermédiaire de la seconde liaison de communication sécurisée (17), lorsque l'acceptation du consommateur est reçue par le système de serveur de transaction, le système de serveur de transaction étant configuré pour collecter les détails de paiement stockés dans les ensembles de données du premier fournisseur respectif et du premier consommateur, et pour finaliser le paiement en transmettant les détails de la transaction concernant le paiement à un réseau de traitement des paiements,
le système de serveur de transaction (14) étant en outre configuré pour annuler le système de transaction et de paiement sécurisé si le mouvement relatif d'un consommateur par rapport à une union de transaction et de paiement telle que détectée par le système de serveur de transaction (14) procure une situation où il n'y a plus un chevauchement partiel du champ de consommateur et du champ de fournisseur constituant l'union de transaction et de paiement.

2. Système de transaction et de paiement selon la revendication 1, le système de serveur de transaction étant configuré pour procurer une seconde union de transaction et de paiement lorsqu'un second consommateur se trouve dans une union de transaction et de paiement avec le premier fournisseur.

3. Système de transaction et de paiement selon la revendication 1, le système de serveur de transaction (14) étant configuré pour établir une liaison de communication de confiance par défaut entre un fournisseur (10) et le système de serveur de transaction (14) lorsque le fournisseur vient en ligne dans le système de serveur de transaction.

4. Système de transaction et de paiement selon la revendication 1, le système de serveur de transaction (14) étant configuré pour utiliser différents procédés de sécurité lors de l'établissement d'une liaison de communication de confiance respective (13) entre un fournisseur (10) et le système de serveur de transaction, et lors de l'établissement d'une liaison de communication de confiance (17) entre un terminal mobile d'un consommateur (15) et le système de serveur de transaction (14),
le système de serveur de transaction (14) étant en outre configuré pour traduire la signalisation de protocole respective entre les procédés de sécurité respectifs qui sont utilisés.

5. Système de transaction et de paiement selon la revendication 1, le transfert d'une somme d'argent à payer à un fournisseur depuis un consommateur comprenant :
la procuration par le fournisseur de la somme à payer au consommateur, et l'acceptation par le consommateur du paiement en entrant la somme d'argent à payer dans un terminal mobile enregistré auprès du consommateur et le transfert de la somme d'argent au système de serveur de transaction (14) par l'intermédiaire de la liaison de communication sécurisée (17).

6. Système de transaction et de paiement selon la revendication 1, le transfert d'une somme d'argent à payer à un fournisseur depuis un consommateur comprenant :
l'acceptation par le consommateur (15) de la somme d'argent à payer au fournisseur en renvoyant un signal d'acceptation au système de serveur de transaction (14), et
l'envoi par le fournisseur du montant à payer au serveur de transaction (14).

7. Système de transaction et de paiement selon la revendication 1, un terminal mobile d'un consommateur (15) étant agencé avec un lecteur d'empreinte digitale en option, le terminal mobile étant agencé pour émettre une approbation d'une transaction d'un consommateur (15) lorsque le consommateur (15) touche le lecteur d'empreinte digitale et que l'empreinte digitale est reconnue.

8. Système de transaction et de paiement selon la revendication 1, un terminal mobile d'un consommateur (15) étant agencé avec un système de reconnaissance faciale tridimensionnelle en option, le terminal mobile étant agencé pour émettre une approbation d'une transaction de paiement du consommateur (15) lorsque les systèmes de reconnaissance faciale tridimensionnelle reconnaissent le consommateur (15).

9. Système de transaction et de paiement selon la revendication 1, des liaisons de communication de confiance (17) vers les terminaux mobiles des consommateurs respectifs (15) étant établies lorsque les consommateurs passent un côté périphérique d'un champ de fournisseur défini (12) d'un fournisseur (10), et est maintenu tant qu'il existe une union de transaction et de paiement entre les consommateurs respectifs et le fournisseur.

10. Système de transaction et de paiement selon la revendication 1, le système de serveur de transaction (14) étant en outre éventuellement agencé pour qualifier une position géographique d'un consommateur (15) venant dans une union de transaction comprenant :
la comparaison des données de position géographique reçues à partir d'un terminal mobile du consommateur (15) avec des données obtenues à l'aide d'un procédé de triangulation de tour de téléphonie cellulaire et/ou d'un procédé de localisation similaire dans un système de positionnement hybride situé dans les locaux d'un fournisseur (10).

11. Système de transaction et de paiement selon la revendication 1, une approbation d'une transaction de paiement par un consommateur (15) comportant éventuellement une transmission d'un jeton identifiant la transaction de paiement à partir du système de serveur de transaction (14),
le jeton étant envoyé à un terminal mobile du consommateur (15) sur le réseau de confiance (17) entre le terminal mobile et le système de serveur de transaction (14), le consommateur pouvant remettre le contenu du jeton à des personnes travaillant pour un fournisseur (10), qui peuvent entrer le contenu du jeton dans un système configuré du fournisseur confirmant ainsi la transaction de paiement.

12. Système de transaction et de paiement selon la revendication 1, une approbation d'une transaction de paiement par un consommateur (15) comportant éventuellement une transmission d'un jeton identifiant la transaction du système de serveur de transaction (14) à un serveur configuré situé dans les locaux d'un fournisseur (10).

13. Système de transaction et de paiement selon la revendication 1, un fournisseur pouvant définir des champs de fournisseur respectifs supplémentaires permettant le partage du paiement entre un nombre de consommateurs en union avec le fournisseur.

14. Système de transaction et de paiement selon la revendication 11, un fournisseur étant un restaurant et un champ de fournisseur modélisé étant équivalent à une forme et à une taille des tables de restaurant respectives, et les consommateurs en union avec ce champ de fournisseur étant équivalents aux consommateurs qui sont assis près des tables de restaurant respectives.

15. Système de transaction et de paiement selon la revendication 11, un fournisseur (10) en plus d'un champ de fournisseur modélisé ayant un champ d'intérêt modélisé, et un nombre quelconque de consommateurs pouvant former des unions d'intérêt avec le fournisseur, permettant ainsi le transfert d'informations ciblées directement du fournisseur aux consommateurs respectifs au sein de l'union d'intérêt.

16. Système de transaction et de paiement selon la revendication 1, un fournisseur étant situé dans un véhicule en mouvement, et le serveur de transaction suivant des positions géographiques du véhicule en recevant et en mettant à jour des coordonnées géographiques à partir d'un transmetteur de position géographique associé au véhicule.

17. Système de transaction et de paiement selon la revendication 1, les profils d'utilisateur des utilisateurs respectifs comprenant des détails de paiement liés aux cartes de crédit, aux cartes de débit, aux cartes de fidélité, aux codes PIN, aux numéros de compte bancaire et aux éléments d'informations de paiement similaires.
